# EUROPÄISCHE PATENTSCHRIFT

(11) **EP 2 186 598 B1**
(45) Veröffentlichungstag und Bekanntmachung des Hinweises auf die Patenterteilung: **14.09.2016**
(21) Anmeldenummer: 09013008.9
(22) Anmeldetag: 15.10.2009
(51) Int. Cl.: B23K 37/047, B23K 37/04, B23P 21/00, B62D 65/02

(54) **Typenvariable Fügestation**
Type-variable joining station
Station d'assemblage à types variables

(30) Priorität: 14.11.2008 DE 102008057369
(43) Veröffentlichungstag der Anmeldung: 19.05.2010
(73) Patentinhaber: Bayerische Motoren Werke Aktiengesellschaft, 80809 München (DE)
(72) Erfinder: Näb, Robert, 85356 Freising (DE); Niedermeier, Ludwig, 81549 München (DE); Hoesl, Anton, 93152 Nittendorf (DE); Strumpf, Hellmuth, 84130 Dingolfing (DE)

(56) Entgegenhaltungen:
- EP-A1- 0 903 197
- EP-A1- 1 172 170
- EP-A2- 0 296 369
- US-E- R E36 541

## Beschreibung

Die Erfindung bezieht sich auf eine typenvariable Fügestation und insbesondere eine Geometrie-Schweißstation zur Bearbeitung von Kraftfahrzeug-Karosserieteilen, mit mindestens einem zweidimensional translatorisch verfahrbaren Seitenspannrahmen einschließlich einer den Spannrahmen beim Transport lagefest sichernden Verriegelung, siehe z.B. EP-A-0 903 197.

Bei bekannten typenvariablen Fügestationen dieser Art werden die Seitenspannrahmen aus Gewichtsgründen nicht mit Hilfe von Transportrobotern, sondern auf Führungsschienen reversierend zwischen einer Arbeits- und einer Bereitschaftsposition und bei einem Modellwechsel quer dazu aus der Bereitschafts- in eine Ruheposition befördert, wo vom bisher verwendeten auf den nachfolgend benötigten Spannrahmentyp gewechselt und dieser dann in die Bereitschaftsposition zurück- und bis zu einem erneuten Modellwechsel im Fertigungstakt reversierend zwischen der Bereitschafts- und der Arbeitsposition verfahren wird. Beim Transport zwischen der Ruhe- und der Bereitschaftsposition wird der Spannrahmen auf schlittenfesten Schienenstücken eines Transportschlittens gelagert, die in der Bereitschaftsposition des Transportschlittens fluchtend zu ortsfesten Schienenabschnitten ausgerichtet sind und gemeinsam mit diesen die Führungsbahn zwischen Bereitschafts- und Arbeitsposition bilden. Damit der Spannrahmen beim Schlittentransport lagefest auf den schlittenfesten Schienenstücken gesichert ist, ist zwischen dem Transportschlitten und dem Spannrahmen eine fremdkraftbetätigte Verriegelung vorgesehen, die bei Erreichen der Bereitschaftsposition ausgerückt wird, um so den Spannrahmen für den Reversierantrieb zwischen Bereitschafts- und Arbeitsposition freizugeben.

Aufgabe der Erfindung ist es, eine Fügestation der eingangs genannten Art so auszubilden, dass der Spannrahmenwechsel und insbesondere die Spannrahmenverriegelung auf baulich einfache und zeitsparende Weise erfolgt.

Diese Aufgabe wird erfindungsgemäß durch die im Patentanspruch 1 gekennzeichnet Fügestation gelöst.

Erfindungsgemäß wird der Spannrahmen beim Transport zwischen Ruhe- und Bereitschaftsposition selbsttätig lagefest verriegelt und in dieser gleichzeitig mit dem Spannrahmentransport in Richtung der Arbeitsposition ebenfalls selbsttätig freigeschaltet und so eine rein transportgesteuerte, in der Bereitschaftsposition verzögerungsfreie Spannrahmenverriegetung und -freigabe unter Verzicht auf fremdkraftbetriebene Zusatzaktuatoren erreicht, mit der Folge, dass sich nicht nur der Bau- und Steuerungsaufwand für den Verriegelungsmechanismus, sondern durch den Fortfall verriegelungsbedingter Stillstandzeiten vor allem auch die Spannrahmen-Wechselzeiten signifikant reduzieren.

Aus Gründen einer weiteren baulichen Vereinfachung enthält der Verriegelungsmechanismus gemäß Anspruch 2 vorzugsweise eine mit dem Spannrahmen auf der einen Führungsbahn zwischen Ruhe- und Bereitschaftsposition mitlaufende und beim Durchfahren des an die Bereitschaftsposition angrenzenden Führungsbahn-Endbereichs mechanisch entriegelte, erste und eine zweite, gegensinnig zur ersten wirkende, beim Durchfahren des Führungsbahn-Endbereichs einerseits ortsfest angeordnete und andrerseits mit dem Spannrahmen quer zur Fahrtrichtung lagefest verkoppelte, beim Spannrahmentransport auf der anderen Führungsbahn zwischen Bereitschafts- und Arbeitsposition jedoch selbsttätig freigeschaltete Verriegelungseinheit, wobei die erste Verriegelungseinheit, wie nach Anspruch 3 bevorzugt, auf baulich einfache Weise durch eine stationär positionierte Steuerkulisse im Führungsbahn-Endbereich fahrtrichtungsabhängig ein- bzw. ausgerückt wird, während die zweite Verriegelungseinheit ebenfalls aus Gründen einer baulich einfachen Gestaltung nach Anspruch 4 vorzugsweise ein beim Spannrahmentransport auf der einen Führungsbahn sich feststehend über den Führungsbahn-Endbereich erstreckendes, mit einem spannrahmenfesten Gegenelement in Fahrtrichtung verschieblich zusammenwirkendes Verriegelungselement enthält.

In besonders bevorzugter Ausgestaltung der Erfindung ist das Verriegelungselement der zweiten Verriegelungseinheit gemäß Anspruch 5 fest mit dem Schubglied eines den Spannrahmentransport zwischen Bereitschafts- und Arbeitsposition bewirkenden Linearförderers verbunden, so dass der Spannrahmen in der Bereitschaftsposition nicht nur für den Transport in Richtung der Arbeitsposition freigegeben, sondern gleichzeitig auch der Linearförderer auf dem Wege über das Verriegelungselement und das spannrahmenfeste Gegenelement selbsttätig antriebsschlüssig mit dem Spannrahmen verkoppelt wird.

Nach einer gemäß Anspruch 6 bevorzugten, konkreten Ausführungsform der Erfindung ist der Spannrahmen, wie an sich bekannt, durch die Verriegelung an einem auf der Führungsbahn von und zu der Ruheposition verfahrbaren Transportschlitten auf schlittenfesten, quer zur Führungsbahn angeordneten Schienenstücken lagefest gesichert und diese sind in der Bereitschaftsposition fluchtend zu ortsfesten, zur Arbeitsposition verlaufenden Schienenabschnitten ausgerichtet.

Weil die Spannrahmenverriegelung erfindungsgemäß ohne spannrahmenseitige Energieversorgung arbeitet, muss eine solche nicht in aufwändiger Weise bereits während des Spannrahmentransports an diesen angedockt werden, sondern stattdessen wird der Spannrahmen in besonders zweckmäßiger Weise nach Anspruch 7 erst in der Arbeitsposition über in dieser dann selbsttätig ineinander greifende Kupplungsstücke an die zur lagegenauen Spannrahmen- und Bauteilfixierung benötigte Energie- und Signalversorgung angeschlossen.

Die Erfindung wird nunmehr anhand zweier Ausführungsbeispiele in Verbindung mit den Zeichnungen näher erläutert. Es zeigen in stark schematisierter Darstellung:
- **Fig. 1**: eine Fügestation nach der Erfindung im Bereich der einen Symmetriehälfte mit dem Spannrahmen in der Bereitschaftsposition;
- **Fig. 2**: eine Seitenansicht der in Fig. 1 gezeigten Fügestation im verkleinerten Maßstab mit zwei typenmäßig unterschiedlichen Spannrahmen, jeweils in der Ruheposition; und
- **Fig. 3a, b**: eine alternative Ausführungsform der zweiten, in dem an die Bereitschaftsposition angrenzenden FührungsbahnEndbereich angeordneten Verriegelungseinheit in der Eingriffs- (a) und in der Freigabestellung (b).

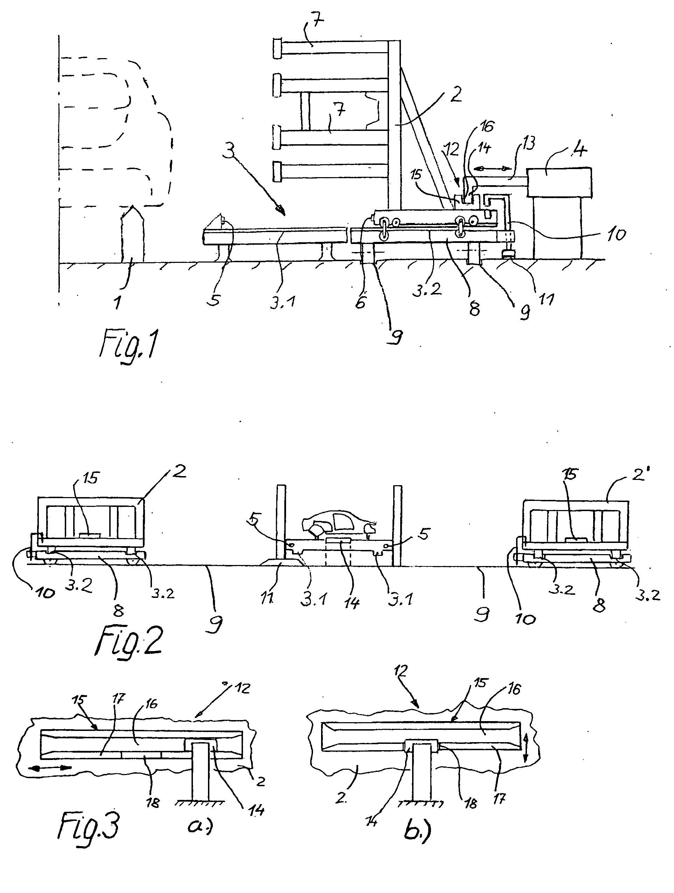

In den Fign. 1 und 2 ist eine Fügestation in Form einer Geometrie-Schweißstation dargestellt, die im Zuge einer Fertigungsstraße angeordnet ist und dazu dient, die durch ein Fördersystem zu- und abgeführten, in Fig. 1 strichpunktiert gezeigten Karosserieteile, nämlich insbesondere die Bodengruppe und die Karosserie-Seitenteile, lagegenau zueinander zu fixieren und dann mit Hilfe von - der Deutlichkeit halber nicht dargestellten - Schweißrobotern miteinander zu verschweißen.

Zum Fixieren der Karosserieteile an der Geometriestation enthält diese ein übliches Bodenspannsystem 1 für die Karosserie-Bodengruppe und beidseitig der Geometriestation je einen Seitenteil-Spannrahmen 2, welcher über schienengeführte Rollen auf einer Führungsbahn 3 quer zur Förderrichtung des Fördersystems zwischen einer Bereitschaftsposition (Fig. 1) und einer das Karosserie-Seitenteil lagegenau an der Bodengruppe positionierenden Arbeitsposition verfahrbar gelagert ist. Der Spannrahmentransport auf der Führungsbahn 3 erfolgt bei dem gezeigten Ausführungsbeispiel mit Hilfe eines externen, reversierenden Linearantriebs 4, etwa in Form einer hydraulischen Kolben-Zylindereinheit. In der Arbeitsposition wird der Spannrahmen 2 über dann selbsttätig ineinandergreifende Kupplungsstücke 5, 6 an eine Energie- und Signalversorgung angeschlossen und an Querstreben 7 mit dem auf der anderen Seite der Fügestation angeordneten Gegenspannrahmen zu einem schubsteifen Rahmenverbund verspannt.

Wie aus Fig. 1 ersichtlich, ist die Führungsbahn 3 zweiteilig mit ortsfesten und auf einem Transportschlitten 8 befestigten Schienenstücken 3.1 bzw. 3.2 ausgebildet, wobei der Transportschlitten 8 auf einer weiteren, senkrecht zur Zeichenebene der Fig. 1 verlaufenden Führungsbahn 9 verfahrbar ist. Bei einem Wechsel des Karosserietyps verbleibt der Spannrahmen 2 auf den Schienenstücken 3.2 des Transportschlittens 8 und wird mit diesem auf der Führungsbahn 9 aus der Bereitschaft- in eine Ruheposition (Fig. 2) abtransportiert, während ein weiterer Transportschlitten 8, auf welchem sich ein für den neuen Karosserietyp benötigter Spannrahmen 2' befindet, auf der Führungsbahn 9 aus der Ruheposition zugestellt und in der Bereitschaftsposition mit den Schienenstücken 3.2 fluchtend zu den ortsfesten Schienenstücken 3.1 ausgerichtet wird, woraufhin der auf diese Weise ausgewechselte Spannrahmen 2' in die Arbeitsposition verfahren und der neue Karoserietyp nach dem gegenseitigen Andocken der Querstreben 6 verschweißt werden kann.

Beim Transport auf der Führungsbahn 9 muss der Spannrahmen 2 lagefest auf den Schienenstücken 3.2 gesichert, in der Bereitschaftsposition hingegen für den Spannrahmentransport auf der Führungsbahn 3 freigeschaltet werden. Der entsprechende Verriegelungsmechanismus arbeitet selbsttätig und ohne Unterbrechung des Spannrahmentransports und enthält eine erste, in die Verriegelungslage vorgespannte Verriegelungseinheit 10, welche beim Durchfahren des an die Bereitschaftsposition angrenzenden Endbereichs der Führungsbahn 9 mechanisch entriegelt wird. Bei dem gezeigten Ausführungsbeispiel ist die Verriegelungseinheit 10 ein zwischen Spannrahmen 2 und Transportschlitten 8 wirksamer Verriegelungsstift, der federnd in die Verriegelungslage (Fig. 2) vorgespannt ist und durch eine ortsfeste Steuerkulisse 11 entgegen der Federkraft in die Freigabestellung (Fig. 1) angehoben wird, wenn der Transportschlitten 8 den Führungsbahn-Endbereich durchläuft. Während und nach der Entriegelung der ersten übernimmt eine zweite, insgesamt mit 12 bezeichnete Verriegelungseinheit die Sicherung des Spannrahmens 2 im Endbereich der Führungsbahn 9 bis hin zur Bereitschaftsposition, gibt in dieser jedoch den Spannrahmen 2 für den Transport auf der zweiten Führungsbahn 3 frei, sobald der Linearförderer 4 aktiviert wird. Darüber hinaus wird der Linearförderer 4 gemäß den Fig. 1 und 2 auf dem Wege über die zweite Verriegelungseinheit 12 auch noch selbsttätig an den Spannrahmen 2 an- und von diesem abgekuppelt. Zu diesem Zweck enthält die Verriegelungseinheit 12 ein fest mit dem Schubglied 13 des Linearförderers 4 verbundenes Verriegelungselement 14 und ein am Spannrahmen 2 befestigtes Gegenelement 15 mit einem U-förmigen Aufnahmeschlitz 16. Solange der Spannrahmen 2 durch die erste Verriegelungseinheit 10 auf dem Transportschlitten 8 gesichert ist, stehen das Verriegelungselement 14 und das spannrahmenfeste Gegenelement 15 nicht miteinander in Eingriff. Sobald jedoch der Transportschlitten 8 den Führungsbahn-Endbereich erreicht, greift das Verriegelungselement 14 in den Aufnahmeschlitz 16 des Gegenelements 15 und wirkt mit diesem in Richtung der Führungsbahn 9 verschieblich, in Richtung der Schienenstücke 3.2 aber verschiebefest zusammen, bis die Bereitschaftsposition erreicht ist. Bei der nachfolgenden Aktivierung des Linearförderers 4 ermöglicht die Verriegelungseinheit 12 ohne weitere Steuereingriffe einen ungehinderten Spannrahmentransport auf der zweiten Führungsbahn 3 und verbindet dabei den Spannrahmen 2 bis zu einem erneuten Spannrahmenwechsel antriebsschlüssig mit dem Linearförderer 4.

In Fig. 3 ist eine alternative Ausführungsform der zweiten Verriegelungseinheit 12 gezeigt, zum einen in der Verriegelungsstellung (a) im Führungsbahn-Endbereich und zum anderen in der Freigabestellung (b) in der Bereitschaftsposition, jeweils in einer ausschnittsweisen Darstellung. In diesem Fall arbeitet die Verriegelungseinheit 12 getrennt von dem (in Fig. 3 nicht gezeigten) Linearförderer 4 und das Verriegelungselement 14 ist unabhängig von diesem ortsfest angeordnet, während das Gegenelement 15 auf Seiten des äußeren Profilschenkels 17 mit einer Aussparung 18 versehen ist, welche in der Bereitschaftsposition (Fig. 3 b) fluchtend zu dem Verriegelungselement 14 ausgerichtet ist und dadurch einen ungehinderten Spannrahmentransport auf der zweiten Führungsbahn 3 durch den Linearförderer freigibt.

## Patentansprüche

1. Typenvariable Fügestation, insbesondere Geometrie-Schweißstation, zur Bearbeitung von Bau- und insbesondere Kraftfahrzeug-Karosserieteilen, mit mindestens einem zweidimensional translatorisch auf einer ersten Führungsbahn (9) zwischen einer Ruhe- und einer Bereitschaftsposition und auf einer zur ersten querverlaufenden zweiten Führungsbahn (3) zwischen der Bereitschafts- und einer die Bauteile an der Fügestation lagegenau fixierenden Arbeitsposition verfahrbaren Spannrahmen (2) einschließlich einer den Spannrahmen auf der ersten Führungsbahn quer zu dieser lagefest sichernden, in der Bereitschaftsposition freigeschatteten Verriegelung, wobei die Verriegelung (10, 12) beim Spannrahmentransport auf der ersten Führungsbahn (9) bis hin zur Bereitschaftsposition selbsttätig ein- und in dieser zeitgleich zum Spannrahmentransport in Richtung der zweiten Führungsbahn (3) selbsttätig freigeschaltet ist.

2. Fügestation nach Anspruch 1, **dadurch gekennzeichnet, dass** die Verriegelung (10, 12) eine mit dem Spannrahmen (2) auf der ersten Führungsbahn (9) mitlaufende und beim Durchfahren des an die Bereitschaftsposition angrenzenden Führungsbahn-Endbereichs mechanisch entriegelte, erste (10) und eine zweite, gegensinnig zur ersten wirkende, beim Durchfahren des Führungsbahn-Endbereichs einerseits ortsfest angeordnete und andrerseits mit dem Spannrahmen quer zur Fahrtrichtung lagefest verkoppelte, für den Spannrahmentransport auf der zweiten Führungsbahn (3) jedoch freigeschaltete Verriegelungseinheit (12) enthält.

3. Fügestation nach Anspruch 2, **dadurch gekennzeichnet, dass** die erste Verriegelungseinheit (10) durch eine im Führungsbahn-Endbereich stationär positionierte Steuerkulisse (11) fahrtrichtungsabhängig ein- bzw. freischaltbar ist.

4. Fügestation nach Anspruch 2 oder 3, **dadurch gekennzeichnet, dass** die zweite Verriegelungseinheit (12) ein beim Spannrahmentransport auf der ersten Führungsbahn (9) sich feststehend über den Führungsbahn-Endbereich erstreckendes, mit einem spannrahmenfesten Gegenelement (15) in Fahrtrichtung verschieblich zusammenwirkendes Verriegelungselement (14) enthält.

5. Fügestation nach Anspruch 4, **dadurch gekennzeichnet, dass** das Verriegelungselement (14) der zweiten Verriegelungseinheit (12) fest mit dem Schubglied (13) eines den Spannrahmentransport auf der zweiten Führungsbahn (3) bewirkenden Linearförderers (4) verbunden ist und mit dem Spannrahmen (2) beim Durchfahren der zweiten Führungsbahn verkoppelt bleibt.

6. Fügestation nach einem der vorhergehenden Ansprüche, **dadurch gekennzeichnet, dass**
der Spannrahmen (2) durch die Verriegelung (10, 12) an einem auf der ersten Führungsbahn (9) verfahrbaren Transportschlitten (8) auf schlittenfesten, quer zur ersten Führungsbahn angeordneten Schienenstücken (3.2) lagefest gesichert ist und diese in der Bereitschaftsposition unter Bildung der zweiten Führungsbahn (3) fluchtend zu ortsfesten, zur Arbeitsposition verlaufenden Schienenabschnitten (3.1) ausgerichtet sind.

7. Fügestation nach einem der vorhergehenden Ansprüche, **dadurch gekennzeichnet, dass**
der Spannrahmen (2) in der Arbeitsposition über in dieser selbsttätig ineinandergreifende Kupplungsstücke (5, 6) an die Medienversorgung (Energie-/Signalversorgung) angedockt ist.

## Claims

1. A type-variable joining station, especially geometry welding station, for working on components and especially on vehicle bodywork parts, having at least one clamping frame (2) movable in a two-dimensionally translatory manner on a first guide path (9) between a rest position and a ready position and on a second guide path (3), running transversely to the first, between the ready position and a working position which fixes the components in a precise position in the joining station, including a locking means which secures the clamping frame in a fixed position on the first guide path transversely thereto and is unlocked in the ready position, wherein
the locking means (10, 12) is automatically activated during the transport of the clamping frame on the first guide path (9) up to the ready position and in this position, it is automatically unlocked at the same time as the clamping frame is transported in the direction of the second guide path (3).

2. A joining station according to claim 1, **characterised in that**
the locking means (10, 12) contains a first locking unit (10) which travels together with the clamping frame (2) on the first guide path (9) and is unlocked mechanically while passing through the end region of the guide path adjoining the ready position, and a second locking unit (12) which acts in the opposite direction to the first locking unit, on the one hand is arranged in a stationary manner while passing through the end region of the guide path and on the other hand is coupled in a positionally fixed manner to the clamping frame transversely to the direction of travel, but is unlocked for the transport of the clamping frame on the second guide path (3).

3. A joining station according to claim 2, **characterised in that**
the first locking unit (10) can be activated or unlocked subject to the direction of travel by a motion link (11) which is positioned in a stationary manner in the end region of the guide path.

4. A joining station according to claim 2 or claim 3, **characterised in that** the second locking unit (12) contains a locking element (14) which extends in a stationary manner over the end region of the guide path during transport of the clamping frame on the first guide path (9) and cooperates in a displaceable manner in the direction of travel with a counter element (15) fixed to the clamping frame.

5. A joining station according to claim 4, **characterised in that**
the locking element (14) of the second locking unit (12) is rigidly connected to the thrust member (13) of a linear conveyor (4) which effects the transport of the clamping frame on the second guide path (3), and remains coupled to the clamping frame (2) while passing through the second guide path.

6. A joining station according to any one of the preceding claims, **characterised in that** the clamping frame (2) is secured in a fixed position by the locking means (10, 12) on a transport carriage (8), movable on the first guide path (9) on rail pieces (3.2) which are fixed to the carriage and are arranged transversely to the first guide path and, in the ready position, they are oriented in alignment with stationary rail portions (3.1) extending to the working position with the formation of the second guide path (3).

7. A joining station according to any one of the preceding claims, **characterised in that** the clamping frame (2) is docked onto the media supply (energy/signal supply) in the working position by coupling pieces (5, 6) which automatically engage in each other in said working position.

## Revendications

1. Poste d'assemblage à modèles variables en particulier poste de soudage ayant une géométrie pour le traitement et en particulier de pièces de carrosserie, de pièces et en particulier de véhicules comprenant au moins un cadre de serrage (2) pouvant être déplacé en translation selon deux dimensions sur une première piste de guidage (9) entre une position de repos et une position d'attente, et sur une seconde piste de guidage (3) s'étendant transversalement à la première piste de guidage entre la position d'attente et une position de travail dans laquelle les pièces sont fixées précisément sur le poste d'assemblage, ainsi qu'un verrouillage déconnecté dans la position d'attente, bloquant le cadre de serrage sur la première piste de guidage transversalement à celle-ci, lors du transport du cadre de serrage sur la première piste de guidage (9) jusqu'à la position d'attente, le verrouillage (10, 12) étant automatiquement connecté et dans celle-ci, simultanément au transport du cadre de serrage dans la direction de la seconde piste de guidage (3) étant automatiquement déconnecté.

2. Poste d'assemblage conforme à la revendication 1,
**caractérisé en ce que**
le verrouillage (10, 12) comporte une première unité de verrouillage (10) se déplaçant avec le cadre de serrage (2) sur la première piste de guidage (9) et déverrouillée mécaniquement lors du passage de la zone d'extrémité de la piste de guidage voisine la position d'attente, et une seconde unité de verrouillage (12) agissant en sens inverse de la première unité de verrouillage (10), d'une part positionnée fixe lors du passage de la zone d'extrémité de la piste de guidage et d'autre part, couplée de façon fixe avec le cadre de serrage transversalement à la direction de déplacement, mais toutefois déconnectée pour permettre le transport du cadre de serrage sur la seconde piste de guidage (3).

3. Poste d'assemblage conforme à la revendication 2,
**caractérisé en ce que**
la première unité de verrouillage (10) peut être connectée ou déconnectée en fonction du sens de déplacement par une coulisse de commande (11) montée stationnaire dans la zone d'extrémité de la piste de guidage.

4. Poste d'assemblage conforme à la revendication 2 ou 3,
**caractérisé en ce que**
la seconde unité de verrouillage (12) comporte un élément de verrouillage (14) s'étendant de manière fixe sur la zone d'extrémité de la piste de guidage lors du transport du cadre de serrage sur la première piste de guidage (9), et coopérant avec un élément antagoniste (15) solidaire du cadre de serrage en se déplaçant par translation avec le sens de déplacement.

5. Poste d'assemblage conforme à la revendication 4,
**caractérisé en ce que**
l'élément de verrouillage (14) de la seconde unité de verrouillage (12) est relié solidairement avec l'organe de poussée (13) d'un transporteur linéaire (4) provoquant le transport du cadre de serrage sur la seconde piste de guidage (3), et reste couplé au cadre de serrage (2) lors du passage de la seconde piste de guidage.

6. Poste d'assemblage conforme à l'une des revendications précédentes, **caractérisé en ce que**
le cadre de serrage (2) est bloqué par le verrouillage (10, 12) sur un chariot de transport (8) mobile sur la première piste de guidage (9) sur des éléments de rail (3.2) solidaires de ce chariot situés transversalement à la première piste de guidage, et ceux-ci sont orientés dans la position d'attente en étant alignés à des segments de rail fixes (3.1) s'étendant vers la position de travail en formant la seconde piste de guidage (3).

7. Poste d'assemblage conforme à l'une des revendications précédentes, **caractérisé en ce que**
dans la position de travail, le cadre de serrage (2) est amarré à une alimentation (alimentation en énergie / de signaux) par l'intermédiaire de pièces d'accouplement (5, 6) venant automatiquement en prise dans celui-ci.
